Europäisches Patentamt

(19) European Patent Office

Office européen des brevets

(11) Publication number: **0 225 805**
**B1**

# EUROPEAN PATENT SPECIFICATION

(45) Date of publication of the patent specification:
21.03.90

(51) Int. Cl.⁴: **G21C 7/10**

(21) Application number: 86309594.9

(22) Date of filing: 09.12.86

(54) Rod cluster spider having improved vane configuration.

(30) Priority: 09.12.85 US 806722

(43) Date of publication of application:
16.06.87 Bulletin 87/25

(45) Publication of the grant of the patent:
21.03.90 Bulletin 90/12

(84) Designated Contracting States:
BE CH ES FR GB IT LI

(56) References cited:
EP-A- 0 158 812
EP-A- 0 159 509
FR-A- 1 560 777
GB-A- 1 013 000
US-A- 4 035 230

(73) Proprietor: WESTINGHOUSE ELECTRIC
CORPORATION, Westinghouse Building Gateway
Center, Pittsburgh Pennsylvania 15222(US)

(72) Inventor: Shockling, Larry Anthony, 116 Teton Drive,
Pittsburgh, PA 15239(US)
Inventor: Francis, Trevor Andrew, 545 Trader Mill Road
Columbia, South Carolina 29223(US)

(74) Representative: van Berlyn, Ronald Gilbert, 23, Centre
Heights, London, NW3 6JG(GB)

ACTORUM AG

## Description

This invention relates to pressurized water reactors and, more particularly, to a spider, for mounting and adjustable positioning of rod clusters.

As well known in the art, conventional pressurized water reactors employ control rods which are mounted within the reactor vessel, generally in parallel spaced relationship, for axial translational movement in telescoping relationship with the fuel rod assemblies. The control rods contain materials, known as poisons, which absorb neutrons and thereby lower the neutron flux level within the core. Adjusting the positions of the control rods relative to the respectively fuel rod assemblies associated therewith controls and regulates the reactivity and, correspondingly, the power output level of the reactor. Typically, the control rods, or rodlets, are arranged in clusters, and the rods of each cluster are attached to a spider, each spider, in turn, being connected to a mechanism operable to raise or lower the associated rod cluster.

Certain advanced designs of pressurized water reactors employ both control rod clusters (RCC) and water displacer rod clusters (WDRC), and also so-called gray rod clusters which are structurally similar to the RCCs wherefore both are referred to herein collectively as RCCs. In one such reactor design, a total of over 2,800 reactor control rods and water displacer rods are arranged in 185 clusters, each of the rod clusters having associated therewith a spider to which the rods of the cluster are individually attached.

In a typical pressurized water reactor of advanced design, there are, at successively higher elevations within the reactor vessel, a lower barrel assembly, an inner barrel assembly, and a calandria, each of generally cylindrical configuration, and an upper closure dome. The lower barrel assembly has mounted therein, in parallel relationship, a plurality of fuel rod assemblies supported at their opposite ends, by lower and upper core plates, the latter being welded to the bottom edges of the cylindrical sidewall of the inner barrel assembly. Within the inner barrel assembly there are mounted a large number of rod guides disposed in closely spaced relationship and in an array extending substantially throughout the cross-sectional area of the inner barrel assembly. The rod guides are of first and second types, respectively housing therewithin reactor control rod clusters (RCC) and water displacer rod clusters (WDRC); these clusters, as received in telescoping relationship within their respectively associated guides, generally are aligned with respectively associated fuel rod assemblies.

One of the main objectives of the advanced designs of pressurized water reactors is to achieve a significant improvement in the fuel utilization efficiency, resulting in lower overall fuel costs. Consistent with this objective, the water displacement rodlet clusters (WDRCs) function as a mechanical moderator control, all of the WDRCs being fully inserted into association with the fuel rod assemblies, and thus into the reactor core, when initiating a new fuel cycle. Typically, a fuel cycle is of approximately 18 months, following which the fuel must be replaced. As the excess reactivity level diminishes over the cycle, the WDRCs are progressively, in groups, withdrawn from the core so as to enable the reactor to maintain the same reactivity level, even though the reactivity level of the fuel rod assemblies is reducing due to dissipation over time. Conversely, the control rod clusters are moved, again in axial translation and thus telescoping relationship relatively to the respectively associated fuel rod assemblies, for control of the reactivity and correspondingly the power output level of the reactor on a continuing basis, for example in response to load demands, in a manner analogous to conventional reactor control operations.

The calandria includes a lower calandria plate and an upper calandria plate. The rod guides are secured in position at the lower and upper ends thereof, respectively, to the upper core plate and the lower calandria plate. Within the calandria and extending between aligned apertures in the lower and upper plates thereof is mounted a plurality of calandria tubes in parallel axial relationship, respectively aligned with the rod guides. A number of flow holes are provided in remaining portions of the calandria plates, at positions displaced from the apertures associated with the calandria tubes, through which the reactor core outlet flow passes as it exits from its upward passage through the inner barrel assembly. The core outlet flow, or a major portion thereof, turns from the axial flow direction to a radial direction for passage through radially outwardly oriented outlet nozzles which are in fluid communication with the calandria.

In similar parallel axial and aligned relationship, the calandria tubes are joined to corresponding flow shrouds which extend to a predetermined elevation within the dome, and which in turn are in alignment with and in close proximity to corresponding head extensions which pass through the structural wall of the dome and carry, on their free ends at the exterior of and vertically above the dome, corresponding adjustment mechanisms, as above noted. The adjustment mechanisms have corresponding drive rods which extend through the respective head extensions, flow shrouds, and calandria tubes and are connected to the respectively associated spiders to which the clusters of RCC rods and WDRC rods are mounted, and serve to adjust their elevational positions within the inner barrel assembly and, correspondingly, the level to which the rods are lowered into the lower barrel assembly and thus into association with the fuel rod assemblies therein, thereby to control the reactivity within the core.

A critical design criterion of such reactors is to mitigate vibration of the reactor internal structures, as may be induced by the core outlet flow as it passes through the reactor internal structures. A significant factor for achieving that criterion is to maintain the core outlet flow in an axial direction throughout the inner barrel assembly and thus in parallel axial relationship relatively to the rod clusters and associated rod guides. This is achieved, in part, by the location of the water inlet and outlet nozzles at an elevation corresponding approximately to that of the calandria assembly, and thus above the inner barrel assembly which houses the rod guides and associated rod clusters, as above noted. Additionally, structural elements known as formers are included within to vessel to assist in maintaining the desired axial flow condition within the inner barrel assembly, in accordance with the invention disclosed in the copending application entitled "MODULAR FORMER FOR INNER BARREL ASSEMBLY OF PRESSURIZED WATER REACTOR", assigned to the common assignee hereof.

It has been determined, however, that the conventional configuration of rod cluster spiders renders them susceptible to flow-induced vibrations, even though the desired axial flow condition is maintained. Such a circumstance is of extreme concern since vibration accelerates the rate of wear of the internals structural elements, including particularly the rods and associated, supporting structures, leading to shortened life of these structural components and increased maintenance expense in the operation of the reactor.

Conventional reaction designs do not incorporate a reactor coolant flow path that results in the spider vanes being subjected to the bulk flow field; instead, the flow paths generally direct the coolant flow radially outwardly (i.e., from an axial path) prior to the flow reaching the normal elevation, or axial operating position, of the spiders. Accordingly, conventional reactor internals have no structural analogy to the dense packing of rod guides and associated rod clusters as are employed in advanced reactor designs of the type herein contemplated, nor any similar flow path requirements as exist therein, and thus do not present the critical design concerns relating to flow-induced vibration of the spider vanes, as above explained. Thus, there are no known solutions to these problems, consistent with the requirements of, and taking into account the environmental factors which exist in the operation of reactors of the advanced designs, as hereinabove set forth.

As before noted, a pressurized water nuclear reactor, of the type with which rod cluster spiders having the improved vane configuration of the present invention are intended for use, employs a large number of control rods, or rodlets, typically arranged in what are termed reactor control rod clusters (RCC) and, additionally, a large number of water displacer rods, or rodlets, similarly arranged in water displacer rod clusters (WDRC), an array of 185 such clusters containing a total of 2800 rodlets (i.e., the total of reactor control rods and water displacer rods) being mounted in parallel axial relationship within the inner barrel assembly of the reactor vessel. The rods of each cluster are mounted at their upper ends to a corresponding spider, and the spider-mounted cluster is received in telescoping relationship within a corresponding rod guide. The spider is connected through a drive rod to a corresponding adjustment mechanism, which provides for selectively raising or lowering the rod cluster relatively to an associated group of fuel rod assemblies, to control the reactivity, and thus the power output level of the reactor.

While the design of such advanced reactors has addressed the achievement of a substantially axial core outlet flow, particularly through the upper internals and thus past the rod guides and associated clusters of rods, it has been determined that the configuration of the conventional spider vanes which support the rods may be susceptible to undesired vibrations; specifically, the conventional configuration of the generally radially extending vanes is not optimum, and thus does not satisfy the design criterion of mitigating vibrations.

More particularly, the spider configuration disclosed in EP-A 158 812 typically comprises a central hub of generally cylindrical configuration, extending in parallel axial relationship relative to the vertical axis of the vessel. Vane assemblies are connected to and extend radially from the central hub, the vane assemblies being of differing configurations but generally comprising vertically oriented vanes, comprising metal sheets, having generally parallel, planar major surfaces, which interconnect two or more cylindrical rod support mounts to each other and to the hub. The rod support mounts as well extend in parallel axial relationship with the hub. The core outlet flow thus passes along the vanes in a parallel flow condition, consistent with the general design criterion of maintaining parallel axial flow.

Each spider, and thus its associated vane assemblies, must be of considerable structural strength. For example, a control rod spider typically supports a total of eight control rods, disposed equiangularly about the central hub on four radially extending vane subassemblies; the total weight of the control rod cluster of eight rods is approximately 90 kg to 113 kg. A typical water displacer rod cluster may comprise up to 24 water displacer rods mounted in alternating groups of two and four rods on corresponding ones of a total of eight vane assemblies, each of the four-rod assemblies including both a radially extending vane element and a pair of transversely extending vane elements, the latter carrying the cylindrical support mounts on their outer extremities. The total weight of a water displacer rod cluster, thus configured, is approximately 318 kg to 363 kg. The spiders must support not only the dead weight of the respective rod clusters, but additionally must accommodate the forces imposed thereon both by the environment of the relatively fast-moving core outlet flow which passes thereover and the rod height adjustment functions.

Thus, the configuration of the spiders must afford significant structural support while, at the same time, mitigating susceptibility to flow-induced vibrations. It is the principal object of the invention to provide a spider configuration which will meet both of these requirements, and the invention accordingly resides in a spider assembly as defined and characterized in claim 1.

A preferred embodiment of the invention will now be described, by way of example, only, with reference to the accompanying drawings, in which:

Fig. 1 is an elevational view, partially in section, of the kind of pressurized water reactor with which a rod cluster spider embodying the invention can be employed;

Fig. 2 is a simplified, or schematic, crosssectional view, taken along line 2–2 in Fig. 1, and illustrating the relatively dense packing of water displacer rod and control rod clusters together with their associated rod guides within the inner barrel assembly of the reactor vessel of Fig. 1;

Fig. 3 is a plan view of an RCC spider;

Fig. 4 is an elevational view, partially in section, of the RCC spider of Fig. 3, taken along the line 4–4 in Fig. 3;

Fig. 5 is a plan view of a WDRC spider;

Fig. 6 is an elevational view, partially in section, of the WDRC spider of Fig. 5, taken along the line 6–6 in Fig. 5;

Figs. 7a and 7b are top plan and side elevational views, respectively, of a radial vane assembly;

Fig. 7c is a cross-sectional view of a vane embodying the invention, as taken along line 7C–7C in Fig.5 7b; and

Fig. 8 is an elevational view of one of the rod support mounts of a spider.

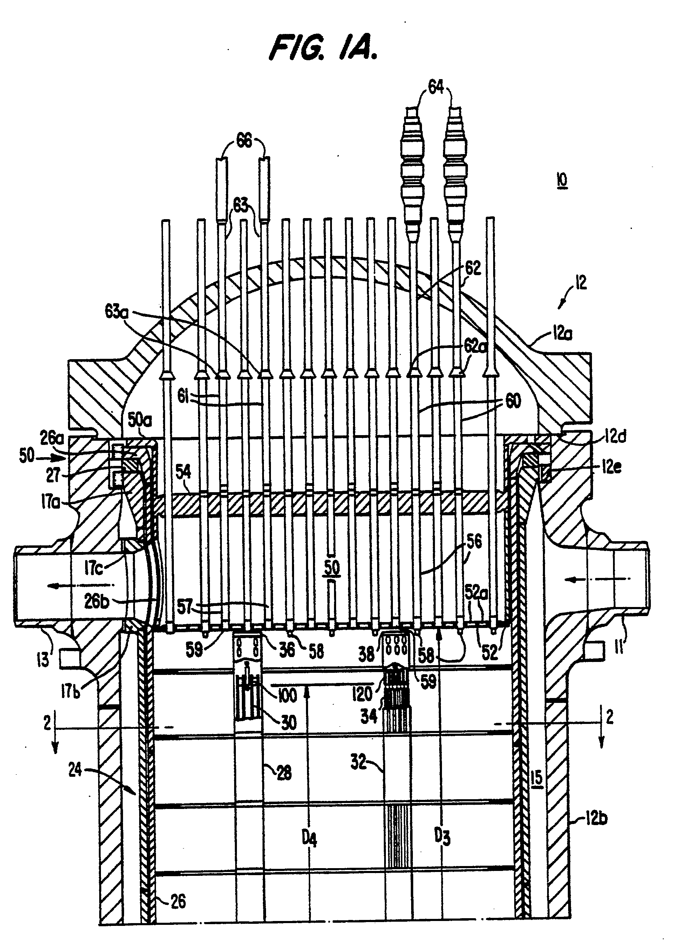

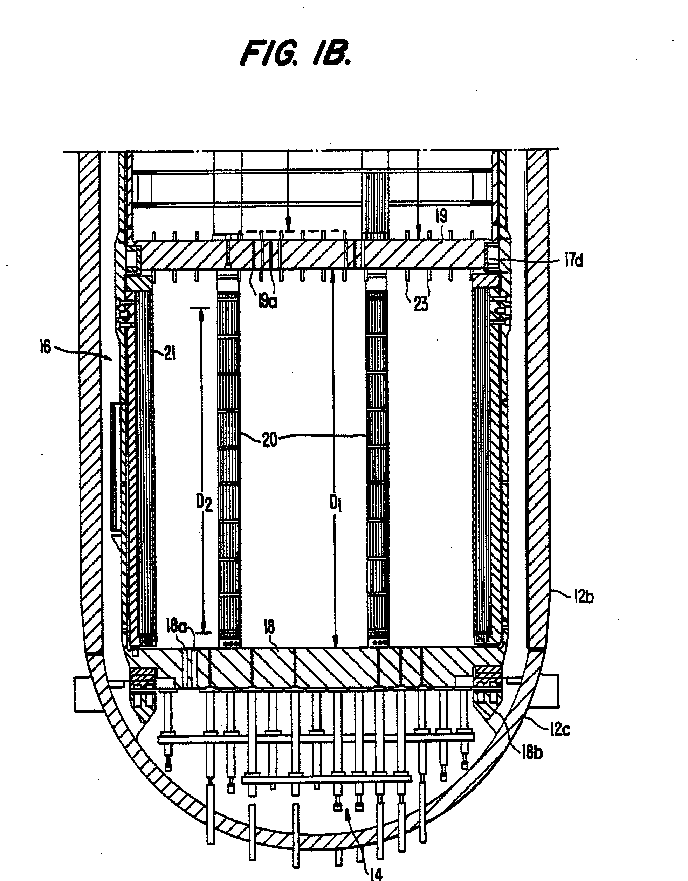

The pressurized water reactor 10 illustrated in Fig. 1 comprises a vessel 12 including an upper dome, or head assembly, 12a, cylindrical sidewalls 12b, and bottom closure 12c comprising the base of the reactor 10. Radially oriented inlet nozzles 11 and outlet nozzles 13 (only one of each is seen in Fig. 1) are formed in the sidewall 12b adjacent the upper, annular end surface 12d thereof. Whereas the cylindrical sidewall 12b may be integrally joined, as by welding, to the bottom closure 12c, the head assembly 12a is secured to the end surface 12d of the sidewall 12b so as to be removable. The sidewall 12b defines an inner, generally annular mounting ledge 12e for supporting various internal structures, as later described herein. The bottom closure 12c contains bottom-mounted instrumentation 14, as schematically indicated.

The lower barrel assembly 16 comprises a generally cylindrical sidewall 17 affixed at its lower end to a lower core plate 18 received on a mounting support 18b. The cylindrical sidewall 17 has at its upper end a mounting ring 17a which is seated on the annular mounting ledge 12e to support the assembly 16 within the vessel 12. The sidewall 17 is solid in the vicinity of the inlet nozzles 11 but has an aperture 17b having a nozzle ring 17c mounted therein which is aligned with and removably secured to the outlet nozzle 13. An upper core plate 19 is supported on a mounting support 17d affixed to the interior surface of the cylindrical sidewall 17 at a position approximately onehalf the axial height thereof. Fuel rod assemblies 20 are supported within the lower barrel assembly 16 by means of bottom mounts 22 carried by the lower core plate 18 and by means of pin-like mounts 23 carried by, and extending through, the upper core plate 19. Flow holes 18a and 19a (only two of which are shown) in the lower and upper core plates 18 and 19 permit reactor coolant to flow into the lower barrel assembly 16 and therethrough in heat exchange relationship with the fuel rod assemblies 20 and thence to flow into the inner barrel assembly 24. A neutron reflecting shield 21 extends interiorly of sidewalls 17, around the reactor core region.

The inner barrel assembly 24 includes a cylindrical sidewall 26 which is integrally joined at its lower end to the upper core plate 19 and has secured thereto, at its upper open end, a mounting ring 26a which is received on an annular hold-down spring 27 and supported, together with the mounting ring 17a of the sidewall 17, on the mounting ledge 12e. The sidewall 26 further includes an aperture 26b aligned with the aperture 17b and the output nozzle 13. Within the inner barrel assembly 24, and densely packed within the cylindrical sidewall 26, there are a plurality of rod guides disposed in closely spaced, parallel relationship with respect to each other; for simplicity of illustration, only two such rod guides are shown in Fig. 1, namely a rod guide 28 housing a cluster of radiation control rods 30 (RCC), and a rod guide 32 housing a cluster of water displacer rods 34 (WDRC). The rods of each RCC cluster 30 and of each WDRC cluster 34 are connected individually to the respectively corresponding spiders 100 and 120. Mounting means 36 and 37 are provided at the respective upper and lower ends of the rod guide 28 and corresponding mounting means 38 and 39 are provided at the respective upper and lower ends of the rod guide 32, the lower mounting means 37 and 39 being used to connect the respective rod guides 28 and 32 to the upper core plate 19, and the upper mounting means 36 and 38 being used to connect the respective rod guides 28 and 32 to a lower calandria plate 52 of a calandria assembly 50.

The calandria assembly 50 includes, in addition to the lower calandria plate 52, an upper calandria plate 54 and a plurality of parallel spaced calandria tubes 56 and 57 which are in axial alignment with apertures in the lower and upper calandria plates 52 and 54 to which latter the calandria tubes 56 and 57 are connected. More specifically, the calandria tubes 56 and 57 are secured to calandria extensions 58 and 59 which are received in corresponding apertures in lower calandria plate 52 and are secured to the latter. Similar structures connect the upper ends of the calandria tubes 56 and 57 to the upper calandria plate 54.

In the arrangement illustrated, only the calandria extensions 58 project downwardly from the lower calandria plate 52 and are connected to corresponding mounting means 36 for the upper ends of the RCC rod guides 28. The upper mounting means 38, associated with the WDRC rod guides 32, may be connected through flexible linkages (not shown) to the mounting means 36 of the RCC rod guides 28. Alternatively, the WDRC rod guides 32 could be connected independently to the lower calandria plate 52, in which case the calandria extensions 59, too, would project downwardly from the plate 52 to engage and laterally support the WDRC mounting means 38.

Disposed within the head assembly 12a of the vessel 12 and extending upwardly from the upper calandria plate 54 there are flow shrouds 60 and 61 which are axially aligned with and connected to the calandria tubes 56 and 57, respectively. A corresponding plurality of head extensions 62 and 63 are axially aligned with the respective flow shrouds 60, 61, the lower ends 62a and 63a of the head extensions being flared, or bell-shaped, so as to facilitate the assemblage and, particularly, to guide the drive rods (not shown in Fig. 1) into the head extensions 62, 63 as the head assembly 12a is lowered onto the end surface 12d of the vessel sidewall 12b, as later explained herein with reference to Figs. 9A and 9B. The flared ends 62a, 63a also receive therein the corresponding upper ends 60a, 61a of the flow shrouds 60, 61 in the completed assembly, as seen in Fig. 1. The head extensions 62, 63 extend through the upper wall portion of the head assembly 12a and are sealed thereto. Control rod cluster (RCC) displacement mechanisms 64 and water displacement rod cluster (WDRC) displacement mechanisms 66 are associated with the respective head extensions 62, 63, flow shrouds 60, 61 and calandria tubes 56, 57 which, in turn, are associated with respective clusters of radiation control rods 30 and water displacement rods 34. The RCC displacement mechanisms (CRDMs) 64 may be of any suitable type known to the art, as may be the displacer mechanisms (DRDMs) 66 for the water displacer rod clusters (WDRCs) 34 which may be similar to the displacer mechanisms disclosed in applicant's U.S. Patent No. 4 439 054.

The respective drive rods associated with the CRDMs 64 and the DRDMs 66 extend toward the respective clusters of radiation control rods 30 and water displacement rods 34 and are connected at their lower ends to spiders 100 and 120. The CRDMs 64 and DRDMs 66 thus function, through the corresponding drive rods, to lower or raise the RCCs 30 and WDRCs 34 through corresponding openings (not shown) in the upper core plate 19 telescopingly into or from, respectively, the associated fuel rod assemblies 20. As indicated in Fig. 1, the interior height $D_1$ of the lower barrel assembly 16 is about 4.5 m, the active length $D_2$ of the fuel rod assemblies 20 is about 3.8 m, the interior height $D_3$ is about 4.4 m and the extent of travel, $D_4$, of the rod clusters 30 and 34 and accordingly of the corresponding CRDM and DRDM drive rods is about 3.7 m.

The RCCS 30 are adjusted in position relatively frequently as compared to the WDRCs 34, to achieve the desired power output level from the reactor. The WDRCs 34 are inserted fully into the lower barrel assembly 16 at the initiation of each fuel cycle, and the WDRCs 32, through their respective drive rods (not shown) and DRDMs 66, then are selectively removed as the excess reactivity is depleted over the fuel cycle. Typically, this is performed by simultaneously moving a group of four WDRCs 34 from their fully inserted positions to a fully raised position within the corresponding WDRC guides 32 in a continuous and controlled withdrawal operation. More specifically, the four WDRCs 34 of a given group are selected so as to maintain a symmetrical power balance within the reactor core, when the group is withdrawn. Typically, all of the WDRCs 34 remain fully inserted in the fuel rod assemblies 20 for approximately 60% to 70% of the approximately 18 month fuel cycle. Groups thereof then are selectively and successively moved to the fully withdrawn position, as the excess reactivity is depleted, so as to maintain a nominal, required level of reactivity which can sustain the desired output power level, under control of the variably adjustable RCCs 30.

The reactor coolant, or water, enters the vessel 10 through the inlet nozzles, such as nozzle 11, thence flows downward through the annular chamber between the cylindrical sidewall 12b of the vessel 12 and the cylindrical sidewall 17 of the lower barrel assembly 16, and then reverses direction to flow through the flow holes 18a in the lower core plate 18 into and upwards through the lower barrel assembly 16, to exit the latter through the flow holes 19a in the upper core plate 19 and flow into the inner barrel assembly 24, continuing in parallel axial flow therethrough and finally exiting upwardly through flow holes 52a in the lower calandria plate 52. Thus, parallel axial flow conditions are maintained through both the lower and inner barrel assemblies 16 and 24. Within the calandria 50, the flow in general turns through 90° to exit radially through the outlet nozzles, such as nozzle 13. The pressure of the cycle water, or reactor coolant, within the vessel 10 typically is in the range of about 155,3 $10^5$ N/m² (153 atmospheres) and provides the energy source, or fluid pressure to the DRDMs 66 for raising the DRDM drive rods from a fully inserted to a fully withdrawn position. As is apparent from Fig. 1, the spiders 100 and 120 are constantly subjected to a flow of reactor coolant coming from the core.

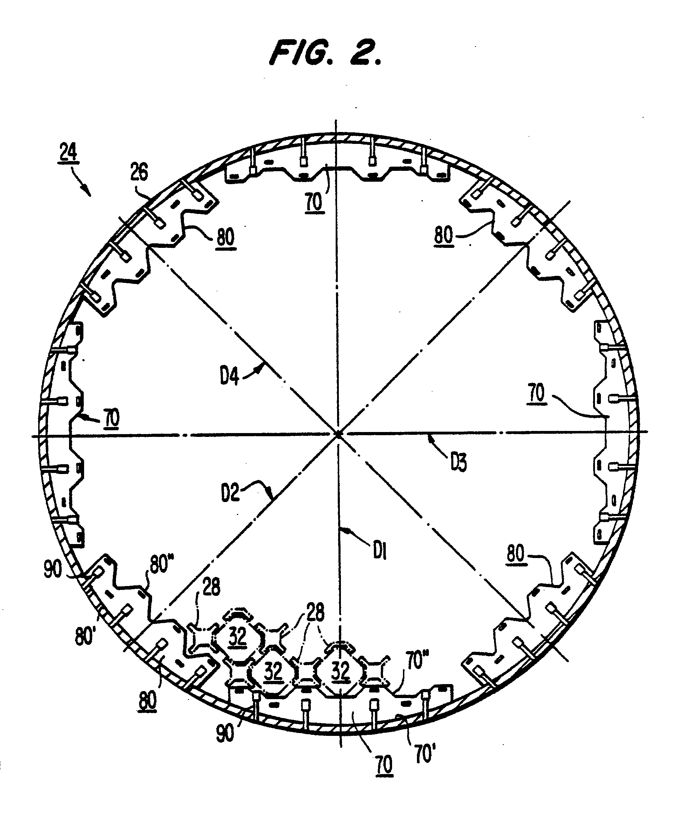

Fig. 2 is a cross-sectional, schematic view, taken along the line 2-2 in Fig. 1, of the inner barrel assembly 24 which serves to illustrate diagrammatically the dense packing of the arrays of control rod clusters (RCCS) 30 and water displacer rod clusters (WDRCs) within the inner barrel assembly 24. For ease of illustration, only the sidewall 26 of the inner barrel assembly 24 is shown, the sidewalls 16 and 12b being omitted and the RCC and WDRC rod guides 28 and 32 housing the corresponding RCC and WDRC rods are shown only in general outline. As readily seen from Figs. 1 and 2, the RCC clusters 30 and WDRC clusters 34 are disposed, in interleaved arrays, substantially across the entire cross-sectional area of the inner barrel assembly 24. This dense packing of the respective rod clusters and associated spiders thus requires careful design to assure not only that parallel flow is maintained throughout, but also that flow induced vibrations and concomitant deleterious force effects are mitigated, to the extent possible.

Modular formers as seen in Fig. 2 are of two different configurations shown at 70 and 80, respectively, disposed symmetrically about quadrature-related diameters D1 and D3, and D2 and D4 and thus in an .alternating succession at 45° angular segments. Attachment elements 90 secure the formers 70 and 80 to the sidewall 26, the outer edges 70' and 80' thereof comprising arcuate segments mating with the interior circumference of the sidewall 26, the inner edges 70" and 80" having configurations so as to mate with the periphery of the interleaved arrays of the RCC and WDRC rod guides 28 and 32.

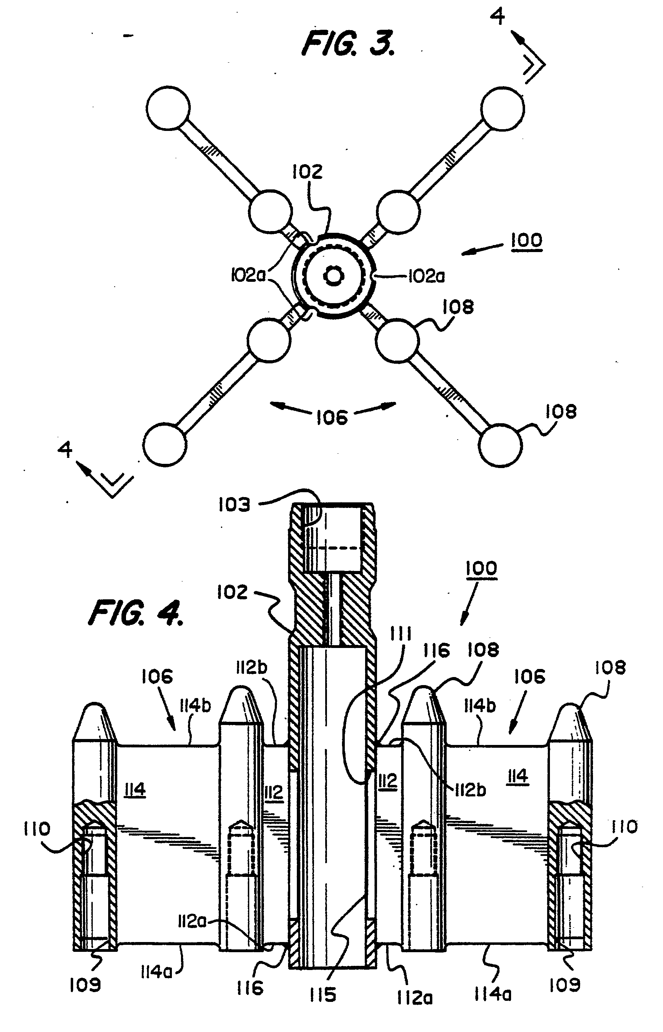

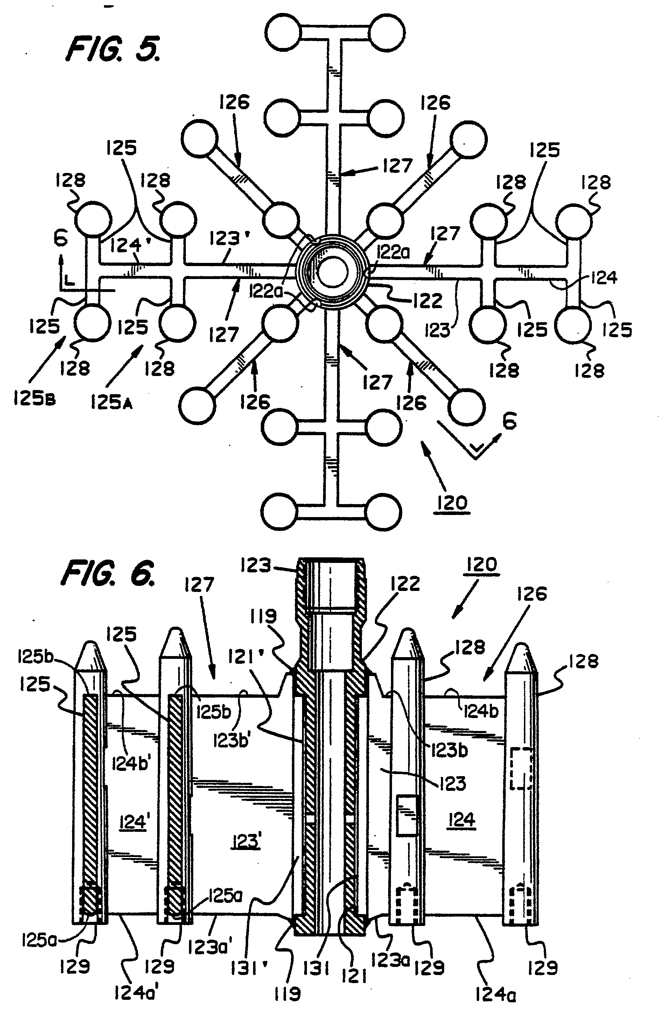

Figs. 3 and 4 are plan and elevational views of an RCC spider 100 which comprises a generally cyclindrical central hub 102 having an internally threaded upper end portion 103 for connection to a drive rod (not shown) which extends, as described above, to an RCC adjustment mechanism 64 for vertically adjusting the position of the spider 100 and its associated control rods (not shown) within the RCC rod guide 28. Recesses 102a are provided to allow a metallic protective sleeve (not shown), which surrounds and overlaps the joint between the drive rod (not shown) and the hub 102, to be locked in place by indenting portions of it into the recesses 102a. Vane assemblies 106 are secured, at their inner edges, to the hub 102 and extend radially therefrom in quadrature. Each vane assembly 106 includes a pair of cylindrical support mounts 108 each having an interior bore 109 with an internally threaded portion 110 for threadedly receiving an externally threaded upper end portion of a control rod (not shown) to be supported from the spider 100.

Figs. 5 and 6 illustrate a WDRC spider 120 which likewise, as the RCC spider 100, includes a generally cylindrical hub 122 with an internally threaded upper end portion 123 for threadedly receiving a drive rod connected to one of the corresponding WDRC control mechanisms 66. The hub 122 has recesses 122a formed therein for the same purpose as explained above with respect to the recesses 102a in the hub 102 (Figs. 3 and 4). Two types of vane assemblies 126, 127 are connected to the hub 122 and radially extend therefrom in alternating, equiangularly displaced relationship with respect to each other. The vane assemblies 126 are substantially similar to the RCC vane assemblies 106 shown in Figs. 3 and 4 in that they extend radially from the hub 122 in quadrature relationship, and each includes a pair of radially displaced WDRC rod support mounts 128. Each vane assembly 127 includes integral transverse vanes 125 extending as first and second oppositely oriented pairs 125A and 125B from the radially extending, planar vane portions 123' and 124' of the assembly 127, and each of which transverse vanes carries a WDRC rod support mount 128 at its distal end. As best seen from Fig. 5, four vane assemblies 127 of the second type extend radially from the hub 122 in mutual quadrature relationship, each intermediate an adjacent quadrature-related pair of vane assemblies 106 in the alternating sequence as mentioned above. Each of the WDRC rod support mounts 128 has a threaded bore 129 at its lower extremity for receiving, in threaded engagement therewith, and externally threaded upper end portions of a corresponding WDRC rod.

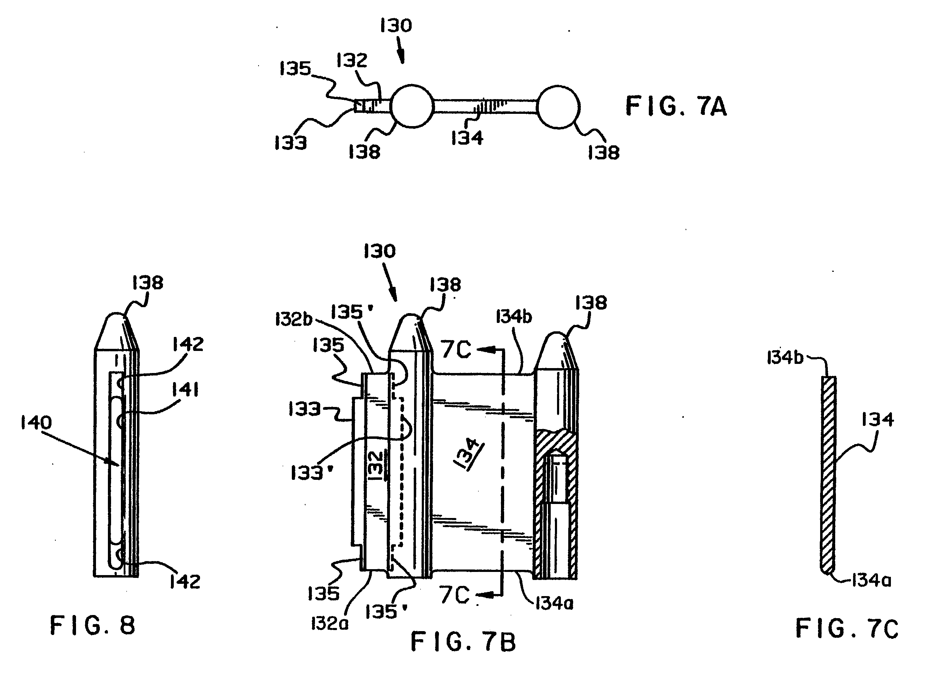

The configuration of the vane assemblies 106 and 126 is described more specifically with particular reference to Figs. 7a, 7b and 7c showing a vane assembly 130 as representative of either of the vane assemblies 106 and 126 seen in Figs. 3 to 6. The vane assembly 130 includes first and second planar vane elements 132 and 134, the latter interconnecting the radially inner and outer rod support mounts 138, and the former connecting the inner rod support mount 138 to the hub of the associated spider, for example, the hub 102 of Figs. 3 and 4 and the hub 122 of Figs. 5 and 6. The first planar vane element 132 furthermore is machined to include on its radially inward and radially outward longitudinal edges, respectively, flanges 133 and 133' of reduced thickness and upper and lower stepped portions 135 and 135'. It is to be understood that the designation of a "planar vane element" or "planar vane element portion" as used herein is intended to describe a sheet-like structure, typically of metal, and having parallel, planar major surfaces substantially as shown.

With concurrent reference to Figs. 7a, 7b, and Fig. 8, the illustrative rod support mount 138 includes a receiving slot 140 for receiving the flange 133, and upper and lower recessed portions 142 for receiving the corresponding upper and lower stepped portions 135 (135') of the flange 132. It is to be understood that the illustrative, second planar vane element 134 includes corresponding flanges on its longitudinal edges for interconnection of the inner and outer rod elements 138.

The vane assembly 130 of Figs. 7a and 7b will be seen to correspond substantially identically to the RCC vane assembly 106 of Figs. 3 and 4 and the WDRC vane assembly 126 of Figs 5 and 6. Accordingly, the vane assemblies 106 and 126 include corresponding first and second planar vane elements 112 and 114 and 123 and 124, respectively, each thereof having longitudinal flanges corresponding to the flange 133 in Fig. 7b for connecting the associated vane assembly 106 and 126 to the respective RCC spider hub 102 and WDRC spider hub 122. This structure is illustrated for the RCC spider 100 in Fig. 4 by the receiving slot 111 in the hub 102 and the flange 115 received therein, and is illustrated for the WDRC spider 120 in Fig. 6 by the receiving slot 121 in the hub 122 and the flange 131 associated with the first planar vane element 123, received therein.

The second type of vane assembly 127 of the WDRC spider 120, as seen in Fig. 6, corresponds substantially to the first vane assembly 126 in that it includes first and second planar vane element portions 123' and 124' which are integrally formed and extend radially from the hub 122, the first portion 123' having a longitudinal flange 131' received in a corresponding receiving slot 121' in the hub 122. The assembly 127 furthermore includes first and second pairs 125A and 125B of third planar vane elements 125 integrally formed with and extending transversely from the first and second vane element portions 123' and 124', the first pair 125A being formed intermediate the portions 123' and 124' and the second pair 125B being

6

formed on the outer longitudinal edge of the second vane element portion 124'. Each of the elements 125 carries a rod support mount 128 on its outer longitudinal edge. It will be understood that the third, or transverse, planar vane elements 125 may include similar flange structures on their outer longitudinal edges for mounting the corresponding rod support mounts 128.

In assembling the respective RCC and WDRC spiders 102 and 120, the innermost planar vane elements 112, and 123, 123' preferably are positioned with the respective flanges 115, 131 and 131' inserted into the corresponding receiving slots 111, 121 and 121' of the associated hubs 102 and 120, and then spot welded in place at the upper and lower extremities thereof as indicated by weld beads 116 in Fig. 3 and 119 in Fig. 6. Thereafter, the joints are brazed along the entire lengths thereof.

Considering again the densely packed arrays of RCC and WDRC rod clusters as indicated in Fig. 2, it will be appreciated that the planar vane elements 112 and 113 of the RCC spider 100 and the planar vane elements, or integral portions thereof, 123, 124, 123', 124' and 125 of the WDRC spider 120 present, in the composite, a substantial linear length of planar or sheet-like elements subjected to parallel flow conditions. The core outlet flow can produce a so-called "vortex street" behind the trailing edge of each such vane element, that is to say, its downstream edge having regard to the flow direction of reactor coolant. The resulting vortex-induced vibration may be of sufficient magnitude to produce substantial wear and shortened life. The phenomenon of immersed two-dimensional vibration due to such a vortex street being formed behind the trailing edge of a planar element when subjected to parallel flow conditions has been investigated both experimentally and theoretically. (See: Blevins, R. D., FLOW-INDUCED VIBRATION, Van Nostrand Reinhold Co., 1977, page 18; R. Brepson et al., "Vibrations Induced by Von Karman Vortex Trail in Guide Vane Bends", FLOW-INDUCED STRUCTURAL VIBRATIONS, published by Sumposium Karlsruhe (Germany), August 14-16, 1972 and edited by Eduard Naudascher, published by Springer-Verlag, 1974. See also, Tebes, G. H., et al. "Hydroelastic Vibrations of Flat Plates Related to Trailing Edge Geometry", Transactions of the ASME, JOURNAL OF BASIC ENGINEERING, December, 1961.)

For a vane element (e.g., any of the vane elements 112, 114 or 123-125) of approximately 12.7 cm (5") in height and 0.813 cm (0.32") in thickness, under the flow conditions developed in normal operation of a reactor of the type herein described, the shedding frequency of a vane may be computed as follows:

$$f_s = \frac{S\ U}{D} \qquad\qquad (1)$$

where $f_s \overset{\Delta}{=}$ Vortez shedding frequency [Hz.]

$S \overset{\Delta}{=}$ Strouhal number

$U \overset{\Delta}{=}$ Flow velocity past the vane cm/sec [inch/sec.]

$D \overset{\Delta}{=}$ Characteristic length, vane thickness cm [inch]

The Strouhal number may be dependent upon the volume of the Reynolds number (Re). The Re may be calculated as follows.

$$Re = \frac{UD\rho}{\mu} \qquad\qquad (2)$$

where $R \overset{\Delta}{=}$ Reynolds number

$U \overset{\Delta}{=}$ Flow velocity past the vane cm/sec [inch/sec.]

$\rho \overset{\Delta}{=}$ Fluid density, 6.11E-5 4.448 N sec$^2$/cm$^4$ [lb$_f$ - sec $^2$/inch$^4$]

$\mu \overset{\Delta}{=}$ Fluid viscosity, 1.14E-8 4.448 N sec$^2$/cm$^4$ [lb$_f$ - sec/inch$^2$]

$D \overset{\Delta}{=}$ Characteristic length, vane thickness cm [inch]

Thus, the Reynolds number is:

Re = 6.38 E 5 (3)

A reasonably applicable Strouhal number may be extracted from Belvins, as:

$S \approx 0.20$ (4)

From this, the calculated expected shedding frequency at operating conditions is:

$$f_s = \frac{S \ U}{D} \qquad (5)$$

$$f_s = \frac{(0.20) \ (372)}{(.31)} = 240 \ Hz. \qquad (6)$$

The shedding frequency as thus computed (i.e., $f_s = 240$ Hz) is quite high, compared to the lowest natural frequencies of the surrounding structural components - - typically $f_n < 100$ Hz. It thus has been recognized that the primary vortex shedding function passes through the structural frequency domain of these structural components during the transition in operation of the reactor from a down condition, in which zero or low flow exists, to a full flow condition as exists in normal operation. This is contrary to the normal, desired state, which is to have the vortex shedding frequency lower than 0.8 times the lowest natural resonant frequency of the structure. Due to the variations in operating conditions, and the associated different levels of flow velocity, there is a potential for the shedding frequency ($F_s$) to coincide with one of the structural natural frequencies ($f_n$). It therefore is desirable to decrease the magnitude of the shedding forcing functions on the spider by an appropriate trailing edge configuration in order to mitigate any such forced response.

Whereas the foregoing references indicate that a number of different trailing edge configurations of planar sheets disposed in parallel flow conditions are available for decreasing the magnitude of the shedding forcing functions on such structures, the theoretical analyses do not take into account the stress conditions to which the spiders are subjected in the environment of a pressure vessel of a reactor system. Particularly, as before noted, the spiders must not only sustain substantial static weight, but must be capable of withstanding additional kinetic forces both in relation to height adjustment operations, particularly in view of the need for assured, rapid translational movement of the RCC rod clusters when rapid shutdown of a reactor is required, and due to flow induced forces. These design conditions must also be achieved in a limited axial space envelope.

Conventional vane element designs, taking into account general hydrostatic flow conditions, have been based on the belief that a trailing edge configuration affording a gradual transition from the parallel planar surfaces serves to improve flow characteristics (e.g., trailing edge cross-sectional configurations ranging from semicircular to more gradually tapered forms). In fact, it has been determined that the tapered or curved surfaces extend the area of flow separation and expand the surface area subjected to the turbulent vortex which forms in the flow as it passes beyond the vane element. Moreover, tapered or restraint trailing edge configurations which reduce the flow separation problem have a reduced amount of structural material in the cross-section of the trailing edge, and this weakens the vane for a given height and thickness or, conversely, requires that the longitudinal dimension of the vane element (i.e., the axial height) be increased in order to afford sufficient structural strength. Weakening of the vane elements is not acceptable, and the alternative of increasing height is not practical in view of the corresponding increase in height of the inner barrel assembly which would be required to accommodate the increase vane height in view of the significant concomitant increase in the cost of the vessel which would result.

Contrary to the standard semicircular cross-section trailing edge designs of prior art vane elements, and in accordance with the present invention, it has been determined that a square cross-sectional trailing edge configuration of the vane elements of the rod supporting spiders is near optimum, taking into account vortex in the flow and shedding frequency considerations, along with the required structural strength of the vane elements and the associated spiders and the restrictive allowable space envelope. The significant and determinative factors are to mitigate the shedding function so as to reduce the vibratory response of the structure, while maintaining maximum strength of the vane elements of a given size - - and to achieve these results in a structure which is easy to manufacture, in the interests of mitigating costs. The square, or substantially square, cross-sectional configuration of the trailing edge has been determined to meet these design and operational criteria, and is deemed surprising and unexpected, as a departure from conventional designs. Moreover, the square cross-sectional trailing edge configuration contributes to ease, and thus lower costs, of manufacture of the vane elements - - as contrasted to the conventional semicircular and/or other tapered cross-sectional trailing edge configurations heretofore employed.

Accordingly, the vane elements 132 and 134 of the representative assembly 130 of Figs. 7a and 7c have square cross-sectional trailing edges 132b and 134b, respectively, while retaining conventional semicircular leading, i.e., upstream, edges 132a and 134a, respectively. Correspondingly, the vane elements 112, 112′, 114, 114′, 123, 123′, 124, 124′ and 125 of Figs. 5 and 6 have respective, semicircular leading edges 112a, 112a′, 114a, 114a′, 123a, 123a′, 124a, 124a′, and 125a and square cross-sectional trailing edges 112b, 112b′, 114b, 114b′, 123b, 123b′, 124b, 124b′ and 125b.

## Claims

1. A spider assembly (100, 120, 130) for supporting rod clusters (30, 34) in a pressurized water reactor vessel (12) defining a predetermined axial direction of the core outlet flow therewithin, comprising:
a hub (102, 122) of elongated configuration defining a central axis and adapted for positioning in said reactor vessel (12) in parallel axial relationship to the predetermined axial direction of the core outlet flow; and a plurality of vane assemblies (106, 126, 127, 132, 134) connected to said hub (102, 122), each said vane assembly (106, 126, 127) comprising:
means (108, 128, 138) for mounting at least one rod (30, 34) to each said vane assembly (106, 126, 127, 132, 134), and at least one vane element (112', 123, 123', 125, 132) interconnecting said rod mounting means (108,128, 138) and said hub (102, 122), said vane element (112', 123, 123', 125, 132) having generally parallel, major planar surfaces and being connected along an inner longitudinal edge (115, 131, 131', 133) to said hub (102, 122) such that said planar surfaces of the vane element lie in planes parallel with respect to the longitudinal axis of the hub, and an edge of the vane element forms a trailing edge with respect to said predetermined axial direction of core outlet flow, characterized in that said trailing edge (114b, 123b, 123b', 124b, 124b', 125b, 134b) is flat and lies in a plane substantially normal to said planar surfaces and to said longitudinal axis so as to form a sharp transition from each planar surface to said trailing edge, thereby to mitigate the magnitude of shedding forcing functions imposed on the trailing edge by coolant flow in said axial direction while maximizing the amount of material present at the trailing edge.

2. A spider assembly according to claim 1, characterized in that said trailing edge (114b, 123b, 123b', 124b, 124b', 125b, 134b) is of substantially square crosssection.

3. A spider assembly according to claim 1 or 2, characterized in that at least one of said plurality of vane assemblies (106, 126, 127, 132, 134) comprises at least a first vane element (112', 123, 123', 125, 132) having generally parallel, major planar surfaces and connected along a first longitudinal edge (115, 131, 131', 133) to said hub (102, 122), and at least one pair of transverse vane elements (125) integrally formed with and extending transversely to and in opposite directions from said first vane element (112, 123, 123', 132), each of said transverse vane elements (125) having generally parallel, planar major surfaces and having a longitudinal free edge, remote from said first vane element, with a rod mounting means (108) disposed thereon, and each of the aforesaid vane elements (112', 123, 123', 125, 132) having a trailing edge configuration of substantially square cross-section.

## Patentansprüche

Eine Kreuzvorrichtung (100, 120, 130) zur Halterung von Stabbündeln (30, 34) in einem unter Druck stehenden Wasser Reaktorkessel (12) und zur Bestimmung einer vorbestimmten axialen Richtung des darin stattfindenden Kernaustrittsflusses, bestehend aus einer länglichen Nabe (102, 122), die eine Mittelachse bestimmt und zur Positionierung im Reaktorkessel (12) in paralleler axialer Beziehung zur vorbestimmten Axialrichtung des Kernaustrittsflusses ausgelegt ist, und einer Vielzahl von mit der Nabe (102, 122, verbundenen Flügelsätzen (106, 126, 127, 132, 134), wobei jeder Flügelsatz mit Mitteln (108, 128, 138) zum Befestigen eines Stabes (30, 34) an dem Flügelsatz (106, 126, 127, 132, 134) versehen ist, wobei mindestens ein Flügelelement (112', 123, 123', 125, 132) die Stab-Befestigungsmittel (108, 128, 138) und die Nabe (102, 122) miteinander verbindet, dieses Flügelelement (112', 123, 123', 125, 132) im wesentlichen parallele, planare Hauptflächen aufweist und entlang einer inneren Längskante (115, 131, 131', 133) mit der Nabe (102, 122) verbunden ist, derart, daß die planaren Flächen des Flügelelements in parallelen Ebenen in bezug zur Längsachse der Nabe liegen, und eine Kante des Flügelelements eine in bezug zur vorbestimmten Axialrichtung des Kernaustrittsflusses eine Hinterkante bildet, dadurch gekennzeichnet, daß die Hinterkante (114b, 123b, 123b', 124b, 124b', 125b, 134b) flach ist und in einer im wesentlichen senkrechten Ebene zu den planaren Flächen und zur Längsachse verläuft, derart, daß ein scharfer Übergang von jeder planaren Fläche zur Hinterkante geschaffen ist, um dadurch die Größe der die Ablösung forcierenden Wirkungen zu mindern, die durch Kühlmittelfluß in axialer Richtung auf die Hinterkante treffen und gleichzeitig die an der Hinterkante vorhandene Materialmenge zu erhöhen.

2. Kreuzvorrichtung nach Anspruch 1, dadurch gekennzeichnet, daß die Hinterkante (114b, 123b, 123b', 124b, 124b', 125b, 134b) einen im wesentlichen quadratischen Querschnitt aufweist.

3. Kreuzvorrichtung nach Anspruch 1 oder 2, dadurch gekennzeichnet, daß mindestens einer der zahlreichen Flügelsätze (106, 126, 127, 132, 134) mindestens ein erstes Flügelelement (112', 123, 123', 125, 132) mit im wesentlichen parallelen, planaren Hauptflächen aufweist und entlang einer ersten Längskante (115, 131, 131', 133) an der Nabe (102, 122) befestigt ist, und mindestens ein querliegendes Flügelelementenpaar (125) einstückig mit dem ersten Flügelelement (112, 123, 123', 132) gestaltet ist, dessen Flügel sich quer zu diesem und in entgegengesetzten Richtungen von diesem erstrecken, wobei jedes der querliegenden Flügelelemente (125) im wesentlichen parallele planare Hauptflächen aufweist und eine freie Längskante vom ersten Flügelelement entfernt angeordnet ist, und ferner eine Stabbefestigung (108) daran befestigt ist, und jedes Flügelelement (112', 123, 123', 125, 132) eine Hinterkantenausbildung mit im wesentlichen quadratischen Querschnitt aufweist.

**Revendications**

1. Ensemble (100, 120, 130) d'araignée pour supporter des groupements (30, 34) de barres dans une cuve (12) de réacteur à eau pressurisée définissant une direction axiale prédéterminée de l'écoulement de sortie du coeur à l'intérieur de celle-ci, comportant:
   un moyeu (102, 122) de configuration allongée définissant un axe central et adapté pour le positionnement dans ladite cuve (12) de réacteur en relation axiale parallèle par rapport à la direction axiale prédéterminée de l'écoulement de sortie du coeur ; et une pluralité d'ensembles (106, 126, 127, 132, 134) de palettes connectés audit moyeu (102, 122), chacun desdits ensembles (106, 126, 127) de palettes comportant:
   des moyens (108, 128, 138) pour monter au moins une barre (30, 34) sur chacun desdits ensembles (106, 126, 127, 132, 134) de palettes, et au moins un élément (112', 123, 123', 125, 132) de palette interconnectant lesdits moyens (108, 128, 138) de montage de barres et ledit moyeu (102, 122), ledit élément (112', 123, 123', 125, 132) de palette ayant des surfaces principales planes globalement parallèles et étant connecté le long d'un bord longitudinal intérieur (115, 131, 131', 133) audit moyeu (102, 122) de telle sorte que lesdites surfaces planes de l'élément de palette se trouvent dans des plans parallèles à l'axe longitudinal du moyeu, et qu'un bord de l'élément de palette forme un bord avant par rapport à ladite direction axiale prédéterminée d'écoulement de sortie du coeur, caractérisé en ce que ledit bord avant (114b, 123b, 123b', 124b, 124b', 125b, 134b) est plat et se trouve dans un plan substantiellement perpendiculaire auxdites surfaces planes et audit axe longitudinal de façon à former une transition brutale de chaque surface plane audit bord avant, afin d'atténuer par conséquent l'importance des fonctions de forçage d'élimination imposées sur le bord avant par l'écoulement de caloporteur dans ladite direction axiale tout en maximisant la quantité de matériau présent au bord avant.

2. Ensemble d'araignée selon la revendication 1, caractérisé en ce que ledit bord avant (114b, 123b, 123b', 124b, 124b', 125b, 134b) a une section transversale substantiellement carrée.

3. Ensemble d'araignée selon la revendication 1 ou 2, caractérisé en ce qu'au moins l'un de ladite pluralité d'ensembles (106, 126, 127, 132, 134) de palette comporte au moins un premier élément (112', 123, 123', 125, 132) de palette ayant des surfaces principales planes globalement parallèles et connecté le long d'un premier bord longitudinal (115, 131, 131', 133) audit moyeu (102, 122), et au moins une paire d'éléments (125) de palette transversaux faisant partie intégrante dudit premier élément (112, 123, 123', 132) de palette et s'étendant transversalement à celui-ci et dans des directions opposées, chacun desdits éléments (125) de palette transversaux ayant des surfaces principales planes globalement parallèles et ayant un bord libre longitudinal, éloigné dudit premier élément de palette, avec des moyens (108) de montage de barres disposés sur celui-ci, et chacun des éléments (112', 123, 123', 125, 132) de palette précédemment mentionnés ayant une configuration de bord avant de section transversale substantiellement carrée.

# FIG. IA.

# FIG. IB.

# FIG. 2.

# FIG. 3.

# FIG. 4.

FIG. 5.

FIG. 6.

FIG. 7A

FIG. 7B

FIG. 7C

FIG. 8